# EUROPÄISCHE PATENTSCHRIFT

(11) **EP 1 513 710 B1**
(45) Veröffentlichungstag und Bekanntmachung des Hinweises auf die Patenterteilung: **22.02.2006**
(21) Anmeldenummer: 03737913.8
(22) Anmeldetag: 27.05.2003
(51) Int. Cl.: B60S 1/38, B65D 59/04

(54) **VERPACKUNG FÜR EIN WISCHBLATT FÜR SCHEIBEN VON KRAFTFAHRZEUGEN**
PACKAGING FOR WINDSCREEN WIPERS OF MOTOR VEHICLES
EMBALLAGE DESTINE A UN BALAI D'ESSUIE-GLACE POUR VEHICULES AUTOMOBILES

(30) Priorität: 01.06.2002 DE 10224431
(43) Veröffentlichungstag der Anmeldung: 16.03.2005
(73) Patentinhaber: ROBERT BOSCH GMBH, 70442 Stuttgart (DE)
(72) Erfinder: REIBER, Bodo, 75438 Knittlingen (DE); MUELLER, Asmus, 76137 Karlsruhe (DE); SCHOENLEIN, Dieter, 32805 Horn-Bad Meinberg (DE)
(86) Internationale Anmeldenummer: PCT/DE2003/001721
(87) Internationale Veröffentlichungsnummer: WO 2003/101796

(56) Entgegenhaltungen:
- DE-A- 2 326 093
- DE-A- 3 417 695
- DE-A- 19 951 971

## Beschreibung

### Stand der Technik

Die Erfindung betrifft eine Verpackung für ein Wischblatt für Scheiben von Kraftfahrzeugen nach dem Oberbegriff des Anspruchs 1.

Eine derartige Verpackung ist aus der DE 199 51 971 A1 bekannt. Bei der bekannten Verpackung wird ein vorzugsweise aus Kunststoff bestehendes, steifes Bauteil verwendet, in das das Wischblatt von einer Stirnseite her eingeschoben werden kann, wobei es aus seiner in unbelastetem Zustand gekrümmten Position in einen gestreckten Zustand überführt wird. Ferner ist in der DE 199 51 971 A1 erwähnt, das Bauteil lediglich als Streckhilfe zu benutzen, wobei das Bauteil dann in einem zusätzlichen Behältnis untergebracht werden soll. Nachteilig dabei ist, dass die Verpackung, insbesondere im Zusammenhang mit einem zusätzlichen Behältnis, relativ aufwändig und teuer ist. Aufgrund der erforderlichen Steifigkeit des Bauteils ergibt sich außerdem ein relativ hohes Gewicht des Bauteils. Weiterhin ist die Handhabung für einen Endverbraucher zumindest anfangs gewöhnungsbedürftig, da er nicht gewohnt ist, ein Wischblatt durch Herausziehen aus der Stirnseite eines schienenförmigen Bauteils zu entnehmen.

### Vorteile der Erfindung

Die erfindungsgemäße Verpackung für ein Wischblatt für Scheiben von Kraftfahrzeugen mit den kennzeichnenden Merkmalen des Anspruchs 1 hat den Vorteil, dass sie bei kostengünstiger Herstellbarkeit ein einfaches Handling für einen Endverbraucher erlaubt. Weiterhin ist der Raumbedarf der Verpackung sowie deren Gewicht relativ gering. Erfindungsgemäß wird dies gemäß dem Kennzeichenteil des Anspruchs 1 dadurch ermöglicht, dass das Wischblatt zusammen mit einer Einlage in das Verpackungselement ein- und ausführbar ist und dass die Einlage eine geringere Biegesteifigkeit in Krümmungsrichtung aufweist als das Wischblatt. Durch die besondere Ausbildung der Einlage wird insbesondere bewirkt, dass bei der Entnahme des Wischblatts aus einer Stirnseite des Verpackungselements sich das Wischblatt nicht schlagartig entspannt, sondern beim Herausziehen des Wischblatts das Wischblatt aus seinem in dem Verpackungselement gestreckten Zustand kontinuierlich in seinen gekrümmten Zustand überführt wird.

Vorteilhafte Weiterbildungen der erfindungsgemäßen Verpackung für ein Wischblatt für Scheiben von Kraftfahrzeugen sind in den Unteransprüchen angegeben. Eine definierte Lage des Wischblatts in der Einlage wird erzielt, wenn die Einlage das Wischblatt zumindest teilweise formschlüssig aufnimmt.

Besonders vorteilhaft ist weiterhin, wenn die Einlage die Wischleiste zumindest teilweise umschließt, so dass die Wischleiste geschützt in der Einlage und somit in der Verpackung angeordnet ist.

Die Forderung einer zumindest teilweise formschlüssigen Aufnahme des Wischblatts sowie eines Schutzes der Wischleiste lässt sich in besonders einfacher Art durch ein im Tiefziehverfahren hergestelltes Kunststoffteil verwirklichen, welches sehr preiswert herstellbar ist.

Aus ökonomischen und ökologischen Erwägungen ist es weiterhin vorteilhaft, das das Wischblatt aufnehmende Verpackungselement als Faltschachtel auszubilden.

Zuletzt wird ein sicheres und eindeutiges Handling bei der Entnahme des Wischblatts aus der Verpackung erzielt, wenn die Einlage das Wischblatt in dessen Längsrichtung unverrückbar aufnimmt. In diesem Fall ist sichergestellt, dass bei der Entnahme des Wischblatts aus der Verpackung das Wischblatt zusammen mit der Einlage gemeinsam und gleichmäßig aus der Verpackung herausgezogen wird, so dass sich ein allmählicher Übergang des Wischblatts von seinem gestreckten Zustand in seinen gekrümmten Zustand einstellt.

### Zeichnung

Ein Ausführungsbeispiel der Erfindung ist in der Zeichnung dargestellt und wird nachfolgend näher erläutert. Es zeigen:
Figur 1 eine Seitenansicht eines Wischblatts in seinem unbelasteten Zustand,
Figur 2 eine Draufsicht auf eine aus Kunststoff hergestellte Einlage für zwei Wischblätter,
Figur 3 eine erfindungsgemäße Verpackung, bei der die Wischblätter teilweise entnommen sind in perspektivischer Ansicht und
Figur 4 die Verpackung nach Figur 3, bei der die Wischblätter nahezu vollständig aus der Verpackung entnommen wurden, ebenfalls in perspektivischer Ansicht.

### Beschreibung des Ausführungsbeispiels

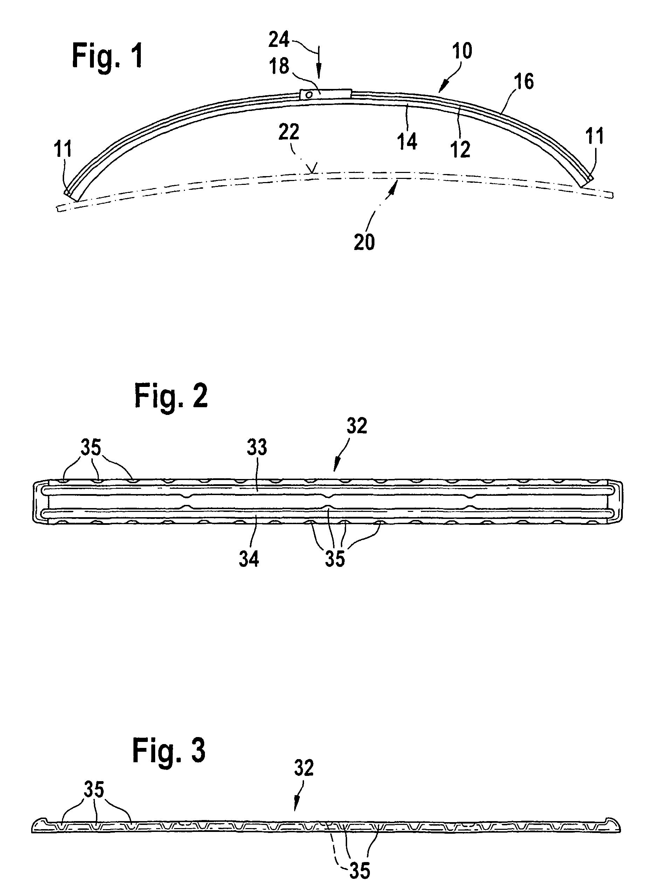

Ein in der Figur 1 in Seitenansicht dargestelltes Wischblatt 10 hat eine langgestreckte, gummielastische Wischleiste 12, die mit einer Wischlippe 14 an der zu wischenden Oberfläche 22 einer Kraftfahrzeugscheibe 20 anlegbar ist. Die Wischleiste 12 wird längsachsenparallel von einem langgestreckten, federelastischen Tragelement 16 gehalten und bildet mit diesem zusammen das Wischblatt 10 aus. Zu dem Wischblatt 10 gehört noch eine Anschlussvorrichtung 18, über welche das Wischblatt 10 mit einem angetriebenen, nicht dargestellten Wischerarm verbunden werden kann. Weiter zeigt Figur 1 den Querschnitt durch die Kraftfahrzeugscheibe 20 in strichpunktierter Darstellung, deren zu wischende Oberfläche 22 der leistenartigen Wischlippe 14 des Wischblatts 10 zugewandt ist. Das Wischblatt 10 ist in einer Position gezeichnet, in der es vollständig unbelastet nur in seinen beiden Enden 11 an der Oberfläche 22 der Kraftfahrzeugscheibe 20 anliegt. Dabei zeigt sich, dass das Wischblatt 10 eine stärkere Krümmung als die Kraftfahrzeugscheibe 20 aufweist. Diese Krümmung des Wischblatts 10 rührt von einer entsprechenden Krümmung des Tragelements 16 her. Bezüglich der so bewirkten Krümmung der Wischlippe 14 ist das Tragelement 16 außenliegend angeordnet.

Wenn das Wischblatt 10 während des Wischbetriebs durch den Wischerarm in Richtung des Pfeiles 24 mit seiner Wischlippe 14 über die gesamte Länge an der Kraftfahrzeugscheibe 20 angelegt ist, sorgt das nun gegen die Kraftfahrzeugscheibe 20 gespannte Tragelement 16 für eine ordnungsgemäße Verteilung der Anlegekraft (Pfeil 24). Weitere Einzelheiten zu einem derartig ausgebildeten Wischblatt 10, welches an sich bekannt ist, sind beispielsweise in der DE 196 41 042 A1 bzw. DE 197 29 864 A1 angegeben.

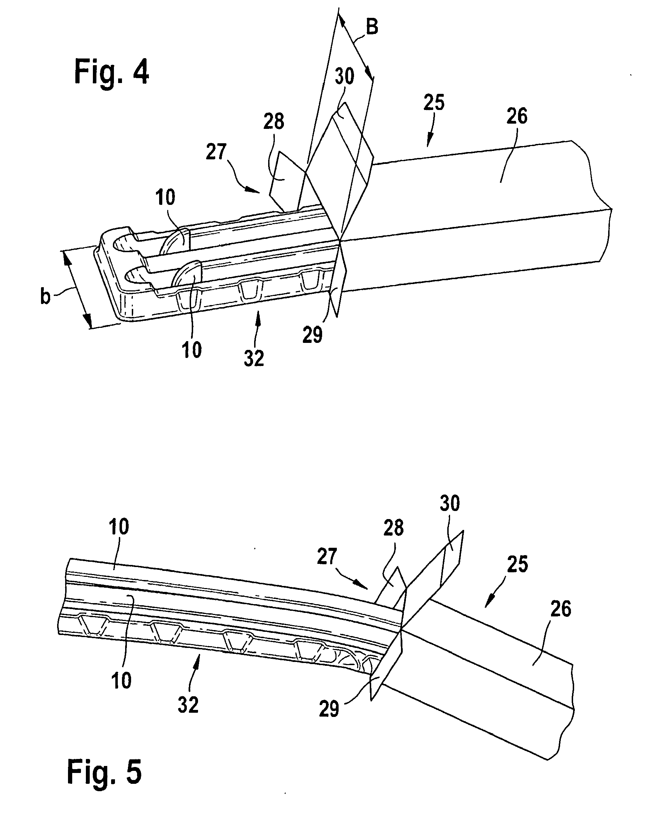

Um ein derartiges, in seinem unbelasteten Zustand gekrümmt ausgebildetes Wischblatt 10 zu verpacken, um es für Endverbraucher im Handel anbieten zu können, dient eine in den Figuren 4 und 5 in ihrer Gesamtheit dargestellte Verpackung 25. Die Verpackung 25 weist eine quaderförmige, insbesondere aus Karton bestehende Faltschachtel 26 auf, die zumindest an ihrer einen Stirnseite 27 mittels Verschlusslaschen 28, 29, 30 verschlossen ist, wobei die Verschlusslasche 30 als Stecklasche ausgebildet ist.

Wesentlich ist, dass die Faltschachtel 25 eine Steifigkeit aufweist, die es erlaubt, dass das Wischblatt 10 in der Faltschachtel 25 in gestrecktem oder nahezu gestrecktem Zustand aufgenommen werden kann, ohne dass sich die Faltschachtel 25 deformiert.

Zum Positionieren des Wischblattes 10 in der Faltschachtel 25 dient eine Einlage 32. Im Ausführungsbeispiel ist die Einlage 32 zur Aufnahme bzw. Positionierung zweier nebeneinander angeordneter Wischblätter 10 ausgebildet. Es sind jedoch ebenso Einlagen für ein oder mehr als zwei Wischblätter 10 denkbar. Die Einlage 32 besteht vorzugsweise aus Kunststoff und ist im Tiefziehverfahren hergestellt. Die Länge der Einlage 32 ist etwas größer als die gestreckte Länge der Wischblätter 10. In der Einlage 32 sind zwei parallel zueinander angeordnete Aufnahmen 33, 34 für die beiden Wischblätter 10 ausgebildet. Die Anordnung der Aufnahmen 33, 34 in der Einlage 32 ist derart, dass die Wischblätter 10 mit den Wischlippen 14 entgegen der Krümmungsrichtung der Wischblätter 10 in die Aufnahmen 33, 34 eingeführt werden können, wobei die Aufnahmen 33, 34 zumindest die Wischlippen 14 der Wischblätter 10 umschließen und somit für einen Schutz der Wischlippen 14 in der Einlage 32 sorgen. Weiterhin ist die Länge der Einlage 32 etwas größer als die Länge der Aufnahmen 33, 34, so dass die Wischblätter 10 in den Aufnahmen 33, 34 in Längsrichtung unverrückbar aufgenommen sind.

Wesentlich ist, dass die Elastizität bzw. Biegesteifigkeit der Einlage 32 geringer ist als die Elastizität bzw. Biegesteifigkeit der Wischblätter 10 in Krümmungsrichtung. Um eine besonders hohe Flexibilität der Einlage 32 in Krümmungsrichtung der Wischblätter 10 zu ermöglichen sind in den Seitenwänden der Aufnahmen 33, 34 V-förmige Ausschnitte 35 ausgebildet, die die Einlage 32 in Krümmungsrichtung der Wischblätter 10 schwächen.

Um eine Lagepositionierung der Einlage 32 in der Faltschachtel 26 quer zur Längserstreckung der Einlage 32 zu bewirken, ist die Breite b der Einlage 32 der Innenbreite B der Faltschachtel 26 angepasst bzw. geringfügig kleiner als letztgenannte. Die Innenhöhe der Faltschachtel 26 ist abhängig davon, in welchem Maße das Wischblatt 10 bzw. die Wischblätter 10 in der Faltschachtel 26 gestreckt werden soll. Bevorzugt ist die Innenhöhe der Faltschachtel 26 derart ausgebildet, dass das Wischblatt 10 bzw. die Wischblätter 10 mitsamt der Einlage 32 in nahezu gestrecktem Zustand in der Faltschachtel 26 aufgenommen werden können.

In den Figuren 4 und 5 ist die Situation dargestellt, bei der ein Endverbraucher die Wischblätter 10 aus der Faltschachtel 26 bzw. der Verpackung 25 entnimmt. Wesentlich ist dabei, wie insbesondere in der Figur 5 dargestellt, dass bei dem Herausziehen der Einlage 32 die Wischblätter 10 mitsamt der Einlage 32 aus der Faltschachtel 26 herausgezogen werden, wobei in Folge der Krümmung der Wischblätter 10 sich die Einlage 32 ebenfalls in Richtung der Krümmung der Wischblätter 10 durchbiegt. Dadurch wird bewirkt, dass die unter Spannung in der Faltschachtel 26 gehaltenen Wischblätter 10 sich bei einer Entnahme aus der Faltschachtel 26 nicht schlagartig entspannen bzw. krümmen, sondern dass dies kontinuierlich bei der Entnahme bzw. dem Herausziehen der Wischblätter 10 aus der Faltschachtel 26 erfolgt.

Ergänzend wird darauf hingewiesen, dass anstelle einer Faltschachtel 26 auch eine Wellpapp-Schachtel oder ein Kunststoffblister bzw. ein anderes in einem Kunststoffverfahren hergestelltes Teil verwendet werden kann, welches nur die erwähnte erforderliche Steifigkeit in Krümmungsrichtung des bzw. der Wischblätter 10 aufweisen muss. Anstelle einer Einlage aus Kunststoff ist es selbstverständlich ebenso denkbar, ein entsprechendes Stanzelement, beispielsweise aus Wellpappe oder Vollpappe, zu verwenden.

## Patentansprüche

1. Verpackung (25) für ein Wischblatt (10) für Scheiben (20) von Kraftfahrzeugen, wobei das Wischblatt (10) ein langgestrecktes, federelastisches und im unbelasteten Zustand gekrümmtes Tragelement (16) für die Wischleiste (12) hat und mit einem das Wischblatt (10) aufnehmenden Verpackungselement (26), das das Wischblatt (10) entgegen seiner Krümmung streckt, wobei das Wischblatt (10) an einer Stirnseite (27) des Verpackungselementes (26) ein- und ausführbar ist, **dadurch gekennzeichnet, dass** das Wischblatt (10) zusammen mit einer Einlage (32) in das Verpackungselement (26) ein- und ausführbar ist und dass die Einlage (32) eine geringere Biegesteifigkeit in Krümmungsrichtung des Tragelements (16) aufweist als das Wischblatt (10).

2. Verpackung nach Anspruch 1, **dadurch gekennzeichnet, dass** die Einlage (32) das Wischblatt (10) zumindest teilweise formschlüssig aufnimmt.

3. Verpackung nach Anspruch 1 oder 2, **dadurch gekennzeichnet, dass** die Einlage (32) die Wischleiste (12) zumindest teilweise umschließt.

4. Verpackung nach einem der Ansprüche 1 bis 3, **dadurch gekennzeichnet, dass** die Einlage (32) ein im Tiefziehverfahren hergestelltes Kunststoffteil ist.

5. Verpackung nach Anspruch 4, **dadurch gekennzeichnet, dass** die Einlage (32) das Wischblatt (10) in dessen Längsrichtung unverrückbar aufnimmt.

6. Verpackung nach einem der Ansprüche 1 bis 5, **dadurch gekennzeichnet, dass** die Einlage (32) eine Breite aufweist, die in etwa der Innenbreite des Verpackungselements (26) entspricht.

7. Verpackung nach einem der Ansprüche 1 bis 6, **dadurch gekennzeichnet, dass** das Verpackungselement eine Faltschachtel (26) ist.

## Claims

1. Packaging (25) for a wiper blade (10) for windows (20) of motor vehicles, the wiper blade (10) having an elongate, resilient supporting element (16), which is curved in the unloaded state, for the wiper strip (12), and with a packaging element (26) which receives the wiper blade (10) and stretches the wiper blade (10) counter to its curvature, the wiper blade (10) being insertable and removable on an end side (27) of the packaging element (26), **characterized in that** the wiper blade (10) can be inserted and removed together with an insert (32) into/from the packaging element (26), and **in that** the insert (32) has a lower flexural strength in the direction of curvature of the supporting element (16) than the wiper blade (10).

2. Packaging according to Claim 1, **characterized in that** the insert (32) receives the wiper blade (10) at least partially in an interlocking manner.

3. Packaging according to Claim 1 or 2, **characterized in that** the insert (32) at least partially surrounds the wiper strip (12).

4. Packaging according to one of Claims 1 to 3, **characterized in that** the insert (32) is a plastic part produced by deep-drawing.

5. Packaging according to Claim 4, **characterized in that** the insert (32) receives the wiper blade (10) in an immovable manner in the longitudinal direction thereof.

6. Packaging according to one of Claims 1 to 5, **characterized in that** the insert (32) is of a width which corresponds approximately to the inner width of the packaging element (26).

7. Packaging according to one of Claims 1 to 6, **characterized in that** the packaging element is a folding box (26).

## Revendications

1. Emballage (25) de balai d'essuie-glace (10) de vitres (20) de véhicule automobile,
l'essuie-glace (10) comportant un élément de support (16), allongé, ayant l'élasticité d'un ressort et cintré à l'état non sollicité pour la lame d'essuyage (12) et un élément d'emballage (26) recevant le balai d'essuie-glace (10), cet élément aplatissant le balai d'essuie-glace (10) contre sa courbure,
le balai d'essuie-glace (10) pouvant s'introduire et s'extraire par une face frontale (27) de l'élément d'emballage (26),
**caractérisé en ce que**
le balai d'essuie-glace (10) s'introduit et s'extrait de l'élément d'emballage (26) avec un insert (32), et
l'insert (32) a une rigidité moindre dans la direction de cintrage de l'élément de support (16) que le balai d'essuie-glace (10).

2. Emballage selon la revendication 1,
**caractérisé en ce que**
l'insert (32) reçoit le balai d'essuie-glace (10) au moins partiellement par une liaison par la forme.

3. Emballage selon la revendication 1 ou 2,
**caractérisé en ce que**
l'insert (32) entoure au moins partiellement la lame d'essuyage (12).

4. Emballage selon l'une des revendications 1 à 3,
**caractérisé en ce que**
l'insert (32) est une pièce en matière plastique fabriquée par emboutissage profond.

5. Emballage selon la revendication 4,
**caractérisé en ce que**
l'insert (32) reçoit le balai d'essuie-glace (10) d'une manière solidaire dans sa direction longitudinale.

6. Emballage selon l'une des revendications 1 à 5,
**caractérisé en ce que**
l'insert (32) a une largeur qui correspond sensiblement à la largeur intérieure de l'élément d'emballage (26).

7. Emballage selon l'une des revendications 1 à 6,
**caractérisé en ce que**
l'élément d'emballage est une boîte pliante (26).
